**Europäisches Patentamt**

**European Patent Office**

**Office européen des brevets**

(19)

(11) Numéro de publication: **0 144 407**
**B1**

(12) # FASCICULE DE BREVET EUROPÉEN

(45) Date de publication du fascicule du brevet:
**18.05.88**

(21) Numéro de dépôt: **84902345.2**

(22) Date de dépôt: **12.06.84**

(86) Numéro de dépôt international:
**PCT/FR 84/00149**

(87) Numéro de publication internationale:
**WO 84/04871 (20.12.84 Gazette 84/30)**

(51) Int. Cl.⁴: **A 23 K 1/175,** A 23 K 1/10,
C 05 F 1/00, C 05 B 11/10,
A 23 N 17/00

(54) **PRODUIT DE NUTRITION, NOTAMMENT POUR ANIMAUX ET SOLS, PROCEDE ET INSTALLATION POUR SA FABRICATION.**

(30) Priorité: **10.06.83 FR 8309779**

(43) Date de publication de la demande:
**19.06.85 Bulletin 85/25**

(45) Mention de la délivrance du brevet:
**18.05.88 Bulletin 88/20**

(84) Etats contractants désignés:
**BE DE FR GB NL**

(56) Documents cité:
**DE-A-2 854 817**
**FR-A-2 406 395**
**FR-E-52 240**
**GB-A-468 812**
**US-A-2 903 356**

**Chemical Abstracts, vol. 46, no. 5, 10 March 1952, (Columbus, Ohio, US), abstract no. 2248a**
**Chemical Abstracts, vol. 74, no. 3, 18 January 1971, (Columbus, Ohio, US), E.T. Moran et al.: "Effectiveness of extradietary calcium supplements in improving egg shell quality and the influence of added phosphorus, p. 122, abstract no. 10875f**

(73) Titulaire: **CALCIALIMENT, Zone Industrielle de la Gare, F-22690 Pleudihen (FR)**

(72) Inventeur: **DUBOIS, Pierre, Georges, 3, rue des Mimosas, F-56260 Larmor- Plage (FR)**
Inventeur: **LOGNONE, François, Marie, Impasse de la Pépinière, F-35400 Saint Malo (FR)**
Inventeur: **PAPE, François, Joseph, Rue du Retalaire, F-29260 Le Folgoet (FR)**

(74) Mandataire: **DEGRET, Jacques, Cabinet Degret 24, place du Général Catroux, F-75017 Paris (FR)**

EP 0 144 407 B1

## Description

L'invention est relative à un produit de nutrition, ainsi qu'à un procédé et une installation pour sa fabrication, et à la composition alimentaire correspondante.

Elle s'applique en particulier, de manière préférée mais non limitative, à la nutrition pour animaux d'élevage (poules pondeuses, bovins, ovins, porçins, chèvres, etc...) et pour les sols comme engrais.

On sait que le calcium et le phosphore sont les deux éléments les plus essentiels à la vie animale et végétale. Pour ce qui concerne le calcium, il est présent dans tous les organismes et dans les diverses productions animales (pontes, sécrétions lactées, viandes). Il doit donc être apporté aux animaux par la voie alimentaire, en quantité suffisante, au même titre que les autres constituants de l'alimentation, afin d'éviter des états de carence grave.

Par exemple, on a établi que, pour obtenir la fixation de 1,2 gramme de calcium par litre de lait, il faut en faire absorber 3 à 4 grammes aux vaches laitières; pour les porcs, chaque kilogramme de poids vif gagné pendant la croissance nécessite l'assimilation d'environ 20 grammes de calcium; pour les poules pondeuses, on estime que 28 % en poids de la matière sèche de l'oeuf sont constitués par du carbonate de chaux et que, pour pondre deux cents oeufs par an, une poule doit assimiler pendant cette période quinze à seize fois la teneur de son corps en calcium.

Mais le calcium intervient également dans divers phénomènes animaux vitaux, notamment en tant que constituant du squelette et des os, mais aussi dans la régulation de l'excitabilité cardiaque et musculaire, la coagulation sanguine, la régulation de la perméabilité cellulaire, l'action générale sédative et calmante, et l'action générale anti-infectieuse dans la lutte contre certaines maladies.

On sait aussi que le phosphore joue un rôle essentiel chez les animaux vertébrés, en étant présent avec le calcium sous la forme de phosphate tricalcique $Ca_3(PO_4)_2$ dans les os, en entrant dans la constitution des enzymes les plus importantes de l'organisme, et en se trouvant chimiquement associé aux principales fractions des acides nucléiques, des lipides du plasma et de la cellule nerveuse.

La carence calcique entraîne des troubles importants du fonctionnement neuro-musculaire, et une décalcification. Pour l'animal producteur, lorsque son alimentation en calcium est insuffisante, la composition calcique de sa production - oeufs, latt et viande - reste à peu près constante dans un premier temps, puis à son tour souffre de ce déficit.

La carence phosphatée se traduit quant à elle, sur le plan général, par une asthénie chronique.

A partir de ces observations, il a été mis au point des formules alimentaires pour animaux comprenant des composés riches en calcium, tels que le carbonate de chaux, combinés à des phosphates de chaux obtenus à partir de poudres d'os ou de phosphates défluorés.

Cette technique d'alimentation animale présente un double avantage: le phosphate de chaux, en apportant du phosphore, mais aussi du calcium, permet d'affiner le rapport phosphocalcique sans qu'il soit nécessaire de faire appel à des suppléments minéraux ne contenant que du calcium. Or, si ce dernier apport supplétif en calcium, notamment à partir de coquilles marines, tel qu'il se pratique dans toute basse-cour reste valable pour ce type d'exploitations, il ne peut en être de même dans les élevages industriels dans la mesure où il est impossible de prévoir une chaîne d'alimentation auxiliaire, pour le calcium exclusivement, dans laquelle les animaux se nourriraient par instinct "à la demande" pour combler un éventuel déficit calcique, à côté de la chaîne d'alimentation principale; à cet égard, il faut en effet savoir que le plus petit élevage industriel de poules pondeuses comprend de l'ordre de 15.000 animaux. En outre, l'on sait que si parfois l'emploi de phosphate de chaux permet à lui seul d'atteindre, dans l'aliment composé, le pourcentage de calcium désiré (cas particulier du poulet en croissance), en revanche lorsque la production envisagée exporte de l'organisme d'importantes quantités de calcium (cas de la ponte et de la lactation), le phophate de chaux ne peut alors à lui seul satisfaire les besoins en calcium sans élever dangereusement la teneur globale de la ration en phosphore minéral hautement assimilable.

Or, si les carences, notamment en calcium, sont dangereuses, les excès sont encore plus dangereux, notamment en phosphore, car ils entraînent d'autres types de carences.

Pour éviter toutes ces difficultés, il a donc été mis au point des formules d'alimentation précités dans lesquelles, pour que le rapport phosphocalcique soit satisfaisant, le calcium est fourni à partir de deux composés:
- le carbonate de calcium,
- le phosphate de calcium, et notamment le phosphate bicalcique.

Dans ces formules, le carbonate de calcium est apporté soit sous forme minérale (craie moulue ou coquillages de mer fossiles, notamment coquilles d'huîtres), soit sous forme organique (coquillages de mer de formation récente).

Parmi les formules les plus conventionnelles pour l'élevage des poules pondeuses, on peut citer:

**Formule A**

| Carbonate de calcium | 7,45 |
|---|---|
| Phosphate bicalcique | 1,43 |
| Complexe oligo-vitaminé (COV) | 1,00 |
| Soja à 48 % de protéines | 19,49 |
| Maïs | 56,34 |
| Blé | 14,21 |
| Méthionine | 0,08 |

**Formule B**

| Carbonate de calcium | 7,14 |
|---|---|
| Phosphate bicalcique | 0,68 |
| Viande osseuse à 55 % de protéines | 4,00 |
| C O V | 1,00 |
| Soja à 48 % de protéines | 15,31 |
| Maïs | 46,07 |
| Blé | 25,72 |
| Méthionine | 0,08 |

dans lesquelles les valeurs des composants représentent des pourcentages en poids.

La pratique et l'expérience ont montré que ces formules donnent des résultats satisfaisants quant à l'apport calcique, phosphoré et protéinique et quant à la prédilection des animaux à leur égard.

La formule B à base de viande osseuse apporte les compléments de calcium et de phosphore qui la distingue de la formule A.

Pour la nutrition des sols, il est connu également de pratiquer des épandages sporadiques d'amendements calcaires, ou calco-magnésiens, à l'état brut d'extraction, cuits ou simplement moulus, complétés par des apports réguliers de fertilisants phosphatés.

Toutefois, tous les sols alcalins et en particulier les sols calcaires refusent l'apport d'amendements renfermant des produits marins, dans la mesure où ceux-ci sont eux-mêmes alcalins.

La nutrition des sols à partir de produits marins n'est donc possible au jour d'aujourd'hui que pour ce qui concerne les sols acides ou neutres.

Cette nutrition de sols, de même que celle d'animaux, à partir de carbonates de calcium combinés entre autres à des phosphates de calcium se fait de plus en plus, lorsque les carbonates proviennent de coquilles marines, à partir de coquillages élaborés récemment de préférence aux coquilles fossiles qui ont perdu la totalité de leur matière organique primitive et sont devenus de ce fait des matières minérales pures.

En effet, les coquilles de formation récente contiennent toujours des protéines, ce qui accroit leur valeur biologique.

D'ailleurs, lorsque les volailles ont la possibilité de choix entre aliments de diverses provenances, elles manifestent toujours une prédilection pour les aliments renfermant les coquilles marines dont la formation est la plus récente.

Leur administration doit alors nécessiter quelques précautions dans la mesure où un milieu intestinal trop alcalin défavorise le maintien sous forme soluble des phosphates et des carbonates qui auront tendance à précipiter. Donc, tout apport excédentaire des carbonates précités, générateur de l'établissement d'un milieu exagérément basique, peut modifier d'une manière défavorable le métabolisme alimentaire.

Or, il est constant que la condition essentielle du maintien d'une bonne assimilation de la nourriture est la conservation d'une bonne solubilité au niveau intestinal.

L'invention a notamment pour but d'éviter ces inconvénients en fournissant un produit de nutrition de substitution, à partir de produits marins calcaires de formation récente, qui d'une part permet de garantir des apports en calcium et en phosphore ainsi qu'un rapport phosphocalcique satisfaisants, tout en offrant d'autre part une remarquable assimilation en milieu intestinal grâce à une utilisation maximale du suc gastrique et à une grande activation de la flore intestinale. A cet effet, le produit de nutrition selon l'invention est caractérisé par le fait qu'il est constitué par des granulats de calcaires marins organiques de formation récente, notamment des coquillages, en particulier des huîtres, ou des algues lithothamnes, dont une partie se présente sous la forme d'au moins l'un des phosphates mono-, bi- et tricalciques résultant de l'action de l'acide phosphorique sur lesdits calcaires marins, ledit produit contenant en poids 20 % de phosphore au maximum.

Dans les formules précitées, le produit de nutrition selon l'invention, tiré des fonds marins, se substitue sensiblement aux carbonates de calcium et phosphates de calcium, d'où un premier avantage certain au plan économique.

Du fait qu'une partie seulement du calcaire marin organique est transformée en au moins un phosphate de calcium, il conserve une traction substantielle de ses autres constituants utiles (soufre magnésium, oligo-éléments, hormones de croissance).

Le produit selon l'invention permet donc de développer très largement l'utilisation de produits naturels calcaires marins organiques, algues lithothamnes et coquillages d'huîtres de formation récente. Ledit produit a une teneur en phosphore spécifiquement adaptée aux besoins nutritifs et, pour exemples: pour l'alimentation des poules pondeuses, la teneur de phosphore, en poids, est de 1 % à 3 %, et de préférence d'environ 2,6 %; pour l'alimentation du bétail, la teneur en phosphore, en poids, est de 3 % à 10 %, et d'environ 7 % pour les bovins et d'environ 9 % pour les porçins; pour la nutrition des sols, la teneur en phosphore, en poids, est de 1 % à 20 %, et de préférence d'environ 5 % à 10 %.

De préférence, le produit selon l'invention est mis en oeuvre de telle sorte qu'il comprenne en mélange environ 55 % de phosphate bicalcique, 35 % de phosphate monocalcique et 10 % de phosphate tricalcique.

Ces trois composés phosphatés se complètent puisque;

- l'intérêt du phosphate monocalcique est double: il est facilement soluble dans tous les milieux, eau et suc gastrique; de par son caractère acidifiant, il évite que le milieu intestinal, toujours chargé de protéines qui ont tendance à alcaliniser, présente un pH excessivement relevé;

- le phosphate bicalcique, insoluble dans l'eau mais qui reste soluble dans le suc gastrique, n'est que très légèrement acidifiant; il est donc inapte à acidifier le milieu autant que le fait le phosphate monocalcique; en revanche, c'est un composé cohérent qui présente une grande quantité de calcium: il constitue donc un véhicule important du calcium, produit passif;

- s'il est en minorité, ce qui est le cas recommandé par l'invention, le phosphate tricalcique est d'un grand intérêt puisqu'il est le produit phosphaté qui va parcourir le trajet le plus long dans le tube digestif; il va être le grand activateur de la flore intestinale pour être finalement absorbé sous forme de composés organiques.

Dans son utilisation pour l'alimentation animale, le produit selon l'invention est donc d'une très grande digestibilité, ce qui assure une réduction massale du calcium apporté au profit de la qualité du métabolisme des céréales et des protéines d'appoint. Dans son application à la nutrition des sols, il est accepté aussi par les sols alcalins, par exemple calcaires, ce qui offre un débouché supplémentaire au type précité d'aigues calcaires et de coquilles marines organiques.

Pour son utilisation, le produit selon l'invention est présenté avec un taux d'humidité de préférence d'environ 3 % pour l'alimentation animale, et de préférence d'environ 7 % pour le traitement des sols; avantageusement, cette humidité est obtenue à partir de l'eau de mer; quant à la granulométrie, elle peut par exemple être d'environ 2 mm à 4 mm pour l'alimentation animale et de 0,5 mm à 3 mm pour le traitement des sols.

On décrira maintenant le procéde selon l'invention pour l'obtention du produit.

Les calcaires marins, plus ou moins brisés par la houle, sont concassés et criblés pour présenter de préférence la granulométrie optimale de 0,5 mm à 4 mm. Cette valeur plafond rend en effet avantageusement l'absorption ultérieure du produit fini très facile; quant à la valeur plancher, elle permet alors d'éviter la présence de particules trop fines dont on sait qu'ultérieurement, lors de la phosphatation, elles seraient le plus exposées à produire du phosphate tricalcique. Les granulats sont ensuite séchés pour l'élimination de tangue en état de poussière, par exemple par cyclonage.

Les granulats peuvent ensuite avantageusement être brassés sous dépression, en présence d'eau et de préférence en présence d'eau de mer, pour être soumis à l'action de l'acide phosphorique, à une température qui est de préférence comprise entre 30°C à 100°C. Du fait de la structure physique du calcaire marin (coquille et/ou algue lithothamne) constituant chaque granulat, il se crée le plus souvent à la surface de celui-ci une micro-fissuration et/ou des torsades ou vrilles qui, d'une part, favorisent un contact de surface important et intime avec le suc gastrique et, d'autre part, réduisent le risque d'adhérence sur les parois disgestives. Dans de tels cas, le suc gastrique est ainsi utilisé au mieux puisqu'il se produit une attaque complète et progressive du granulat traité lors de son cheminement dans l'intestin grêle.

La face lisse de la coquille d'huître, du fait qu'elle est recouverte d'une couche de gélatine, oppose le plus souvent une plus grande résistance à l'action de l'acide que la face rugueuse de la coquille; cette action chimique différentielle, combinée à l'action mécanique du mouvement du rotor servant de réacteur chimique, va dans un tel cas provoquer une torsion des granulats de coquilles. Les contraintes qu'elle peut alors engendrer vont de plus amener la formation de microfissures sur les faces convexes des granulats. Les algues, rugueuses par nature, et les granulats de coquilles déformés par l'attaque de l'acide phosphorique font que les unes et les autres ne présentent aucune surface plane: ils ne peuvent pas se coller sur le tube digestif. En outre, ils vont se maintenir constamment dispersés dans l'appareil digestif, d'où leur grande efficacité tout au long de la digestion. L'attaque limitée en surface des granulats de coquilles et d'algues par l'acide, pour la formation superficielle d'au moins l'un des phosphates mono-, bi- et tricalciques, permet au noyau central de matière organo-minérale de rester intact et de conserver toutes ses propriétés et constituants d'origine.

La désintégration progressive du produit final obtenu selon l'invention permet une libération prolongée d'ions calcium $++$ sur toute la longueur de l'intestin grêle. Il n'existe donc ici aucun risque de neutraliser brutalement les sucs gastriques et de nuire à l'attaque acide des aliments, donc de nuire à l'ensemble de la digestion.

Suivant un premier exemple de mise en oeuvre, en vue d'obtenir un produit d'alimentation de poules pondeuses devant contenir en poids 2,6 % de phosphore et 32 % de calcium, sous une humidité de 3 %, on a traité 1063 g de granulats de coquilles à 13 % d'humidité par 110 g d'acide phosphorique industriel concentré à 75 %.

Suivant un second exemple, en vue d'obtenir un produit d'alimentation de bovins et de porcins devant contenir, en poids, 9 % de phosphore et 32 % de calcium, sous une humidité de 3 %, on a traité 1360 g de granulats de coquilles à 17 % d'humidité par 640 g d'acide phosphorique industriel à la concentration de 75 %.

Un effet secondaire de la réaction est au plan biologique la destruction totale des salmonelles, nombreuses dans les coquillages.

L'action de dépression permet l'élimination des composés fluorés en excès et l'évacuation du gaz carbonique et de la vapeur d'eau résultant de la réaction et de son caractère exothermique.

A la fin de la réaction, les granulats traites sont séchés jusqu'au degré d'humidité désiré indiqué précédemment.

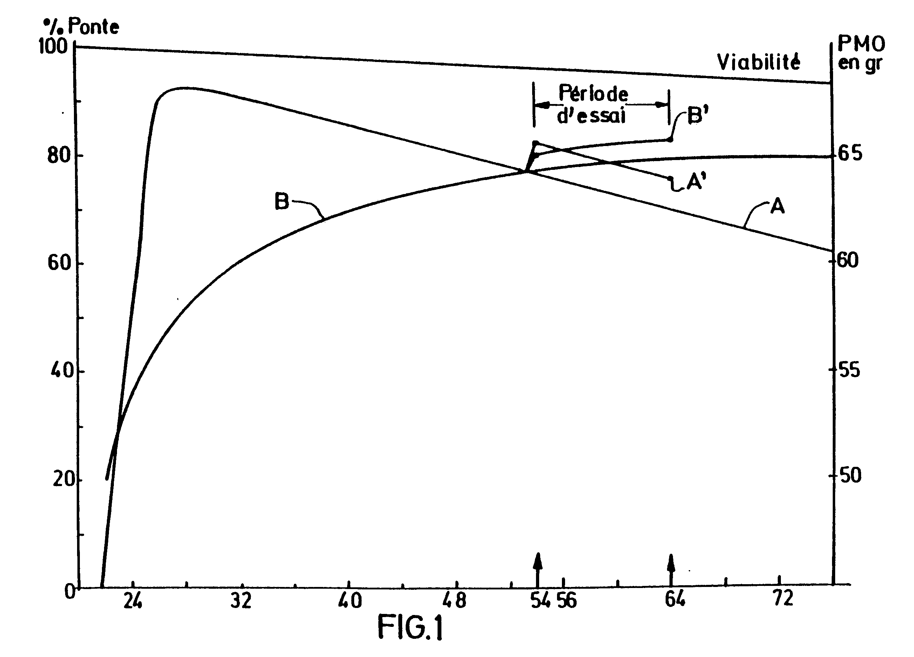

On a représenté sur la figure 1 les résultats d'essais effectués sur des poules pondeuses, entre leur 54ème et leur 65ème semaines de vie. La courbe A montreta fréquence moyenne de ponte et la courbe B montre le poids moyen des oeufs pour un lot de poules nourries de manière classique. Les courbes A' et B' montrent les mêmes grandeurs pour un lot de 15.000 poules identiques nourries avec le produit selon l'invention. Avec le produit selon l'invention, la fréquence de ponte a augmenté de 5 % et le poids moyen des oeufs a augmenté de 1,5 g.

Au surplus, on a constaté une réduction de 50 % du déclassement d'oeufs pour casse ou malformation de la coquille et une plus forte coloration de la coquille et du jaune.

Les essais dont les résultats viennent d'être communiqués ont été réalisés en donnant aux poules exactement le même poids d'aliment que celui donné antérieurement selon l'une des formules A ou B.

La formule alimentaire C donnée tout au long des essais a été:

| Composé de phosphates de calcium résultant de l'invention | 9,83 |
|---|---|
| C O V | 1,00 |
| Soja à 48 % de protéines | 19,86 |
| Maïs | 67,36 |
| Blé | 1,86 |
| Méthionine | 0,09 |

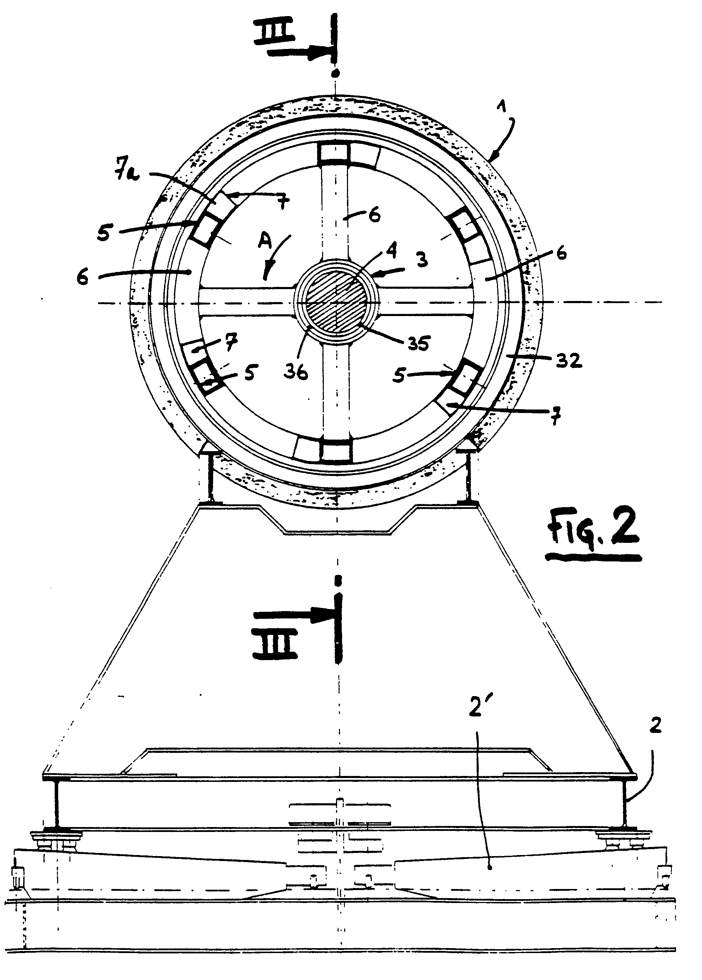

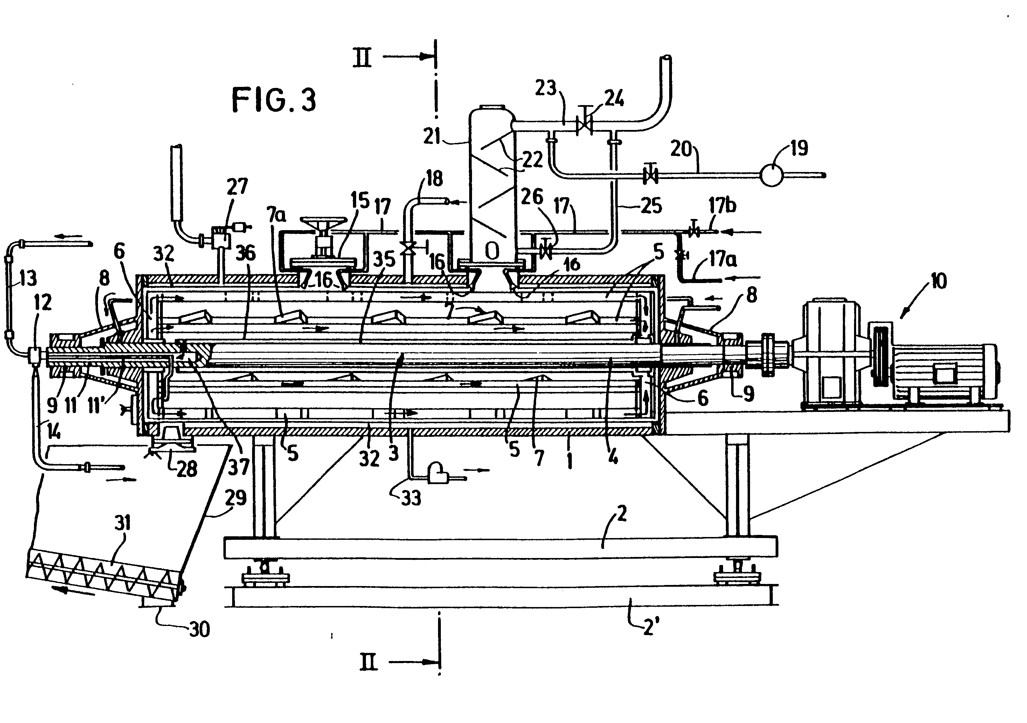

On décrira maintenant, en référence aux figures 2 et 3, une installation pour la fabrication du produit par la mise en oeuvre du procédé ci-dessus. Sur ces figures:

- la figure 2 est une coupe transversale de l'installation selon la ligne II.II de la figure 3; et
- la figure 3 est une coupe longitudinale selon la ligne III.III de la figure 2.

L'installation représentée est un perfectionnement aux installations du type de celles décrites par le brevet FR-A-52 240. Elle comporte un réacteur fermé 1, constitué par un cylindre horizontal à double enveloppe calorifugée, porté par un socle 2 qui repose sur un dispositif de pesage 2'. Dans le réacteur 1 tourne un rotor 3 qui comporte un arbre central plein 4 et des tubes longitudinaux 5, portés par des flasques ou bras radiaux d'extrémite 6, et comportant des palettes de brassage et de déplacement 7. L'arbre 4 traverse axialement les parois terminales 8 du réacteur 1 en étant supporté par des paliers étanches 9. L'arbre 4 est entraîné en rotation à une extrémité par un groupe moto-réducteur 10 placé à côté du réacteur et supporté par le socle 2. A son autre extrémité, l'arbre 4 présente un canal axial 11 qui, à l'extérieur, est relié à un joint tournant 12 du type boîtier Johnson alimenté en vapeur vive par une conduite 13 et permettant l'injection de vapeur vive dans le rotor par une conduite 11' logée au centre du canal 11, et l'aspiration de la vapeur du rotor à travers le canal 11 (à la périphérie de la conduite 11') pour l'acheminement des condensats et de la vapeur vers un ballon de réinjection (non représenté) par une conduite 14.

A sa partie supérieure, le réacteur 1 comporte une porte 15 de chargement en granulats à traiter, après que ceux-ci ont été concassés et criblés, et des buses 16, alimentées par un circuit 17 pour la projection de l'acide phosphorique (amené par la conduite 17a) et éventuellement d'autres liquides nécessaires à la réaction (eau de mer, eau douce, etc...) amenés par la conduite 17b.

Une conduite principale 18 délivre la vapeur vive de chauffage sous pression (par exemple de 6 bars) à la partie superieure centrale du réacteur. Cette vapeur circule dans la chambre annulaire 32 existant dans la double paroi du réacteur. Elle est recueillie sous forme de condensat, en partie basse, par une conduite 33 de retour vers le ballon de réinjection.

L'aspiration des produits gazeux est assurée par une pompe à vide 19 dont la conduite d'aspiration 20 aboutit à la partie supérieure d'un dôme d'expansion 21 à chicanes 22 monté à la partie supérieure du réacteur et communiquant avec l'intérieur de celui-ci. La partie supérieure du dôme reçoit la conduite d'aspiration 20 par une conduite 23 qui débouche sur l'atmosphère et qui porte, au-delà de sa jonction avec la conduite 20, une vanne d'arrêt 24. Une conduite de dérivation 25, avec vanne d'arrêt 26, permet la communication directe de la partie inférieure du vase 21 avec la conduite 23, en aval de la vanne d'arrêt 24.

Les chicanes 22 évitent l'entraînement des particules solides (parcelles de coquilles) vers la pompe à vide 19.

De façon habituelle, on prévoit pour l'espace 32 une vanne de sécurité 27 débouchant sur l'atmosphère et tarée à une valeur de sécurité, par exemple de 6,5 bars.

A une extrémité, le réacteur 1 porte à sa partie inférieure une porte 28 pour le déchargement des granulats traités dans une trémie de sortie 29 qui est portée par un socle auxiliaire 30 et de laquelle ils sont évacués par un transporteur 31 en vue de leur stockage ou d'un traitement ultérieur.

Le chauffage du stator, constitué par le réacteur 1, est assuré par la vapeur vive délivrée par la conduite 18. Le chauffage du rotor 3 est assuré par la vapeur vive qui est délivrée par la conduite 13 et qui, à travers le joint tournant 12 et la conduite 11', est fournie à un flasque ou aux bras creux 6 d'un côte du rotor pour circuler longitudinalement dans les tubes périphériques 5 reliant les espaces intérieurs des flasques ou bras, revenir vers l'axe du rotor à travers, l'autre flasque ou bras 6, et être ramenée axialement vers le joint tournant 12 en circulant dans la chambre annulaire cylindrique 35 ménagée entre l'arbre plein 4 et un tube coaxial 36, cette chambre communiquant en 37 avec le canal 11.

On assure ainsi le chauffage continu de l'enceinte de réaction, d'une part, à sa périphérie extérieure et, d'autre part, au sein même de la masse traitée, la vapeur vive étant maintenue hors de contact avec cette masse et étant évacuée avec ses condensats.

Suivant une autre caractéristique particulière à cette installation, les palettes 7 sont situées derrière leurs tubes de support 5 quand on considère le sens de rotation A du rotor pendant la réaction, de manière à n'avoir pratiquement aucune action de déplacement axial des granulats pendant la réaction, mais simplement un rôle de brassage. Comme montré sur la figure 2, ces palettes présentent une surface principale active 7a qui s'inclinent vers le tube associé 5 et vers l'extrémité de décharge du réacteur. Ainsi, en fin de réaction, quand le sens de rotation du rotor est inversé, les palettes 7 agissent comme moyens transporteurs qui déplacent les granulats traités suivant un mouvement ayant une composante axiale dirigée vers cette extrémité de décharge. Les palettes 7 participent au brassage des brisures de coquillage dans la solution d'acide phosphorique pendant la réaction et elles assurent l'évacuation des granulats à la fin de celle-ci.

Cette construction permet d'éviter la prise en masse des brisures de coquillage lors de la réaction avec l'acide phosphorique et la bonne granulation après la réaction.

Il est à noter que le réacteur 1 est rendu hermétiquement clos à chacune de ses ouvertures 15 et 28 pour l'introduction et l'évacuation de matière, ainsi qu'à chacun de ses paliers de soutien 9.

Cette construction a pour principal avantage de permettre une montée sous vide dès la fin de production de gaz carbonique et de vapeur d'eau (neutralité de l'acide en fin de réaction) par les moyens 19 - 20, et par voie de conséquence de permettre:
- d'extraire sous dépression et sous forme gazeuse les produits nocifs dus à la réaction entre l'acide phosphorique et les coquilles et/ou algues lithothamnes (en particulier, d'extraire des vapeurs d'acide fluorhydrique toujours présentes dans l'acide phosphorique du commerce);
- d'utiliser au maximum l'effet exothermique de la réaction de l'acide phosphorique sur le carbonate de calcium;
- d'économiser la quantité d'énergie calorifique;
- d'extraire sous dépression les particules d'eau incluses dans les tissus calcaires;
- d'obtenir un produit déshydraté permettant une longue conservation.

L'installation qui vient d'être décrite fonctionne bien évidemment de manière discontinue. Cette installation a donc l'avantage supplémentaire d'une très grande précision quant à la quantité d'acide phosphorique à introduire dans le réacteur lorsque l'on connaît par les moyens 2' le poids de coquilles (ou d'algues lithothamnes) et le taux d'humidité de ces coquilles.

A cet égard, il est essentiel que les coquilles et/ou les algues soient fortement imprégnées d'eau de mer pour assurer une répartition rapide et très uniforme de l'acide phosphorique sur toutes les surfaces des brisures, au fur et à mesure de l'introduction de l'acide dans le réacteur en fonctionnement.

Si par hypothèse le titrage d'humidité (eau de mer constitutive et eau de mer superficielle) des granulats et/ou algues introduits n'atteint pas la valeur de 12 à 18 % la plus souhaitable selon l'application ultérieure envisagée, une addition en eau de mer ou en eau douce sera assurée à l'intérieur du réacteur par la canalisation 17b, avant l'introduction de l'acide par la canalisation 17a.

En dernier lieu, on rappelle que, par la technique de mise en oeuvre décrite ci-dessus, le noyau du granulat (brisure de coquillage ou d'algue) n'a pas subi l'attaque phosphorique au sens chimique, et qu'il subit seulement les effets physiques secondaires (torsion sous l'attaque superficielle de l'acide, élévation de température).

Ce type de réaction ménagée rend d'autant plus évident l'intérêt d'utiliser selon la présente invention des tissus coquilliers ayant un caractère organo-minéral, donc de formation récente. A cet égard, il est intéressant que les coquilles et algues tirées des fonds marins possèdent de préférence au moins 4 % en poids de matières organiques, et si possible jusqu'à environ 12 % à 13 % de matières organiques. Sur ce plan, les côtes de Bretagne sont particulièrement riches en coquillages et algues de formation récente, eux-mêmes riches en matières organiques.

Par experience, il a pu être vérifie que la constitution organique des granulats pêchés au large des côtes de Bretagne répond à au moins trois objectifs:
- les surfaces gélatineuses des granulats imposent une résistance suf fisante à la pénétration de l'acide phosphorique sur les faces lisses,
- la présence de protéines de constitution n'est qu'un premier indice du caractère organique du produit; d'autres éléments organiques peu azotés tel que des pigments, des pectines, des nucléides, des phosphonucléides, des amines magnésiques, ferriques, siliciques ont été contrôlés;
- les granulats organiques se caractérisent également par une absence de fer reducteur et une absence de cadmium qui sont au contraire particulièrement abondants dans les coquilles fossilisées.

Les coquillages et algues lithothamnes pourraient aussi être supplementes de silicates divers, d'origine naturelle, provenant de roches et minéraux et incorporés en les soumettant a l'action de l'acide phosphorique.

**Revendications**

1. Produit de nutrition, notamment pour animaux d'élevage et pour sols, caractérisé par le fait qu'il est constitué par des granulats de calcaires marins organiques de formation récente, notamment des coquillages, en particulier des huîtres, ou des algues lithothamnes, dont une partie se présente sous la forme d'au moins l'un des phosphates mono-, bi- et tricalciques résultant de l'action de l'acide phosphorique sur lesdits calcaires marins, ledit produit contenant, en poids, 20 % de phosphore au maximum.

2. Produit selon la revendication 1, destiné plus particulièrement à la nutrition des poules pondeuses, caractérisé par le fait qu'il contient en poids de 1 (un) à 3 (trois) % de phosphore, et de préférence environ 2,6 %.

3. Produit selon la revendication 1, destiné plus particulièrement à la nutrition du bétail, caractérisé par le fait qu'il contient en poids de 3 a 10 % de phosphore, et de préférence environ 7 % pour les bovins et environ 9 % pour les porcs.

4. Produit selon la revendication 1, destiné plus particulièrement à la nutrition des sols, caractérisé par le fait qu'il contient en poids de 1 à 20 % de phosphore, et de préférence environ 5 à 10 %.

5. Produit selon l'une des revendications 1 à 4, caractérisé par le fait qu'il présente un degré d'humidité, de préférence procurée par de l'eau de mer, d'environ 3 % pour la nutrition animale et d'environ 7 % pour la nutrition des sols.

6. Produit selon l'une des revendications 1 à 5, caractérisé par le fait qu'il présente une granulométrie comprise entre 2 mm et 4 mm pour la nutrition animale et entre 0,5 mm et 3 mm pour la nutrition des sols.

7. Produit selon l'une des revendications 1 à 6, caractérisé par le fait que les granulats présentent un noyau de matière organo-minérale non affecté par l'action de l'acide phosphorique et, en surface, une microfissuration et/ou des torsades ou vrilles résultant de l'action physico-chimique dudit acide.

8. Produit selon l'une des revendications 1 à 7, caractérisé par le fait qu'il présente une plus faible teneur en phosphate tricalcique qu'en phosphate monocalcique et qu'en phosphate bicalcique.

9. Produit selon la revendication 8, caractérisé par le fait qu'il comprend en mélange environ 55 % de phosphate bicalcique, 35 % de phosphate monocalcique et 10 % de phosphate tricalcique.

10. Produit selon l'une des revendications 1 à 9, caractérisé par le fait qu'il est complété par des silicates d'origine naturelle soumis à l'action de l'acide phosphorique.

11. Procédé pour la fabrication du produit selon l'une des revendications 1 à 10, caractérisé par le fait qu'il consiste à faire agir chimiquement l'acide phosphorique sur les granulats de calcaires marins organiques de formation récente, en présence d'eau, notamment d'eau de mer, à attaquer partiellement les granulats par ledit acide phosphorique pour former autour d'un noyau coquillier l'un au moins des phosphates mono-, bi- et tricalciques, et à extraire sous dépression les produits gazeux nocifs résultant de cette réaction.

12. Procédé selon la revendication 11, caractérisé par le fait que la réaction est menée en présence d'eau, notamment d'eau de mer, dont le poids représente environ entre 12 et 18 % du poids de la matière calcaire organique marine à traiter.

13. Procédé selon l'une des revendications 11 et 12, caractérisé par le fait que la réaction est menée à une température de 30°C à 100°C.

14. Procédé selon la revendication 13, caractérisé par le fait que le chauffage est réalisé par au moins un circuit de vapeur vive sans contact avec la masse en traitement.

15. Procédé selon l'une des revendications 11 à 14, caractérisé par le fait que les granulats traites sont sechés jusqu'à une humidité d'environ 3 % pour la nutrition animale et d'environ 7 % pour la nutrition des sols.

16. Installation pour la fabrication du produit selon l'une des revendications 1 à 10 par la mise en oeuvre du procédé selon l'une des revendications 11 à 15, du type comportant un réacteur cylindrique horizontal (1), un rotor (3) comportant des moyens (5) de brassage des granulats s'étendant longitudinalement et à la périphérie du réacteur, des moyens (15) de fourniture des granulats, des moyens (16, 17) de fourniture d'au moins l'acide phosphorique, des moyens (28) pour la décharge des granulats traités, et des moyens (19) d'aspiration des éléments gazeux résultant de la réaction, caractérisée par le fait que les moyens longitudinaux (5) portent des palettes (7) inclinées vers l'extrémité de décharge du réacteur et situées derrière lesdits moyens (5) de façon à assurer un simple rôle de brassage des granulats pendant la réaction, lorsque le rotor (3) est entrainé dans un sens par des moyens moteurs (10), et un rôle de refoulement des granulats traités vers ladite extrémité de décharge quand, après la réaction, le rotor est entrainé en sens contraire.

17. Installation selon la revendication 16, caractérisée par le fait qu'elle comporte trois zones de circulation de vapeur vive de chauffage, sans contact avec la masse à traiter, une zone de chauffage du réacteur (1) formée par une chambre annulaire longitudinale (32) et deux zones de chauffage du rotor (3, 5), respectivement centrale et périphérique.

18. Installation selon la revendication 17, caractérisée par le fait que la zone de chauffage centrale au rotor (3, 5) est formée par une chambre annulaire cylindrique (35) ménagée entre l'arbre central plein (4) du rotor et un tube (36) coaxial.

## Patentansprüche

1. Nährstoff, insbesondere für Zuchttiere und Böden, dadurch gekennzeichnet, daß er sich aus organischen Meereskalkgranulaten neuerer Entstehung, vor allem aus Muscheln, insbesondere aus Austern, oder aus Lithothamnium-Algen zusammensetzt, wobei ein Teil davon in Form von mindestens einem Mono-, Bi- und Tricalciumphosphat vorliegt, die durch Einwirkung von Phosphorsäure auf den genannten Meereskalk erhalten sind, wobei der genannte Stoff gewichtsmäßig maximal 20 % Phosphor enthält.

2. Stoff nach Anspruch 1, insbesondere für die Ernährung eierlegender Hühner, dadurch gekennzeichnet, daß er gewichtsmäßig 1 (ein) bis 3 (drei) % phosphor, vorzugsweise etwa 2,6 %, enthält.

3. Stoff nach Anspruch 1, insbesondere für die Ernährung von Vieh, dadurch gekennzeichnet, daß er gewichtsmäßig 3 bis 10 % Phosphor, vorzugsweise ca. 7 % für Rinder und ca. 9 % für Schweine, enthält.

4. Stoff nach Anspruch 1, insbesondere für die Düngung von Böden, dadurch gekennzeichnet, daß er gewichtsmäßig 1 bis 20 % Phosphor, vorzugsweise ca. 5 bis 10 %, enthält.

5. Stoff nach einem der Ansprüche 1 bis 4, dadurch gekennzeichnet, daß er einen vorzugsweise durch Meereswasser erzeugten Feuchtigkeitsgrad von ca. 3 % für die Tiernahrung und ca. 7 % für die Bodendüngung aufweist.

6. Stoff nach einem der Ansprüche 1 bis 5, dadurch gekennzeichnet, daß er einen Korngroßendurchmesser aufweist, der zwischen 2 und 4 mm für die Tiernahrung und zwischen 0,5 und 3 mm für die Bodendüngung liegt.

7. Stoff nach einem der Ansprüche 1 bis 6, dadurch gekennzeichnet, daß die Granulate einen Kern aus einer organischmineralischen Substanz aufweisen, die von der Phosphorsäure nicht angegriffen wird, und daß diese auf ihrer Oberfläche Mikrorisse und/oder Verwindungen oder Schlingen aufweist, die auf die physikalisch-chemische Einwirkung der genannten Säure zurückzuführen sind.

8. Stoff nach einem der Ansprüche 1 bis 7, dadurch gekennzeichnet, daß sein Gehalt an Tricalciumphosphat niedriger ist als sein Gehalt an Mono- und Bicalciumphosphat.

9. Stoff nach Anspruch 8, dadurch gekennzeichnet, daß er sich aus einem Gemisch aus ca. 55 % Bicalciumphosphat 35 % Monocalciumphosphat und 10 % Tricalciumphosphat zusammensetzt.

10. Stoff nach einem der Ansprüche 1 bis 9, dadurch gekennzeichnet, daß er durch Silikate natürlicher Herkunft ergänzt wird, die der Einwirkung der Phosphorsäure ausgesetzt werden.

11. Verfahren zur Herstellung des Stoffes nach einem der Ansprüche 1 bis 10, dadurch gekennzeichnet, daß man die Phosphorsäure auf die organischen Meereskalkgranulate neuerer Entstehung in Gegenwart von Wasser, insbesondere von Meereswasser, chemisch einwirken läßt, daß die Granulate durch die genannte Phosphorsäure teilweise angegriffen werden, damit um einen Schalenkern herum wenigstens eines der Mono-, Bi- und Tricalciumphosphate ausgebildet werden, und daß die bei dieser Reaktion gebildeten schädlichen, gasförmigen Stoffe bei Unterdruck entfernt werden.

12. Verfahren nach Anspruch 11, dadurch gekennzeichnet, daß die Reaktion in Gegenwart von Wasser, insbesondere von Meereswasser, durchgeführt wird, dessen Gewicht etwa zwischen 12 und 18 % des Gewichts des zu behandelnden organischen Meereskalkmaterials liegt.

13. Verfahren nach einem der Ansprüche 11 und 12, dadurch gekennzeichnet, daß die Reaktion bei einer Temperatur von 30°C bis 100°C durchgeführt wird.

14. Verfahren nach Anspruch 13, dadurch gekennzeichnet, daß die Erhitzung mittels mindestens eines Frischdampfkreislaufs ohne Kontakt mit der zu behandelnden Masse erfolgt.

15. Verfahren nach einem der Ansprüche 11 bis 14, dadurch gekennzeichnet, daß die behandelten Granulate bis zu einem Feuchtigkeitsgrad von ca. 3 % für die Tiernahrung und von ca. 7 % für die Bodendüngung getrocknet werden.

16. Anlage zur Herstellung des Stoffs nach einem der Ansprüche 1 bis 10 unter Anwendung des Verfahrens nach einem der Ansprüche 11 bis 15, bestehend aus einem waagerechten, zylindrischen Reaktor (1), aus einem Rotor (3), der mit Mitteln zum Rühren des Granulats ausgestattet ist, welche in Längsrichtung und am Umfang des Reaktors angeordnet sind, mit Mitteln (15) für die Granulatzuführung, mit Mitteln (16, 17) für die Zuführung mindestens einer Phosphorsäure, mit Mitteln (28) für die Entnahme der behandelten Granulate, und mit Mitteln (19) zum Absaugen der bei der Reaktion gebildeten gasförmigen Stoffe, dadurch gekennzeichnet, daß die in Längsrichtung angeordneten Mittel (5) mit Paletten ausgestattet sind, die in Richtung des Entnahmeendes des Reaktors geniegt sind und sich hinter den genannten Mitteln (5) befinden, um die Granulate während der Reaktion in einfacher Weise zu rühren, während der Rotor (3) durch Antriebsmittel (10) in einer Richtung angetrieben wird, und die behandelten Granulate in Richtung des genannten Entnahmeendes zurückzuschieben, wenn der Rotor nach der Reaktion in der Gegenrichtung angetrieben wird.

17. Anlage nach Anspruch 16, dadurch gekennzeichnet, daß sie drei Zirkulationszonen für den Heizfrischdampf, welche nicht in Kontakt mit der zu behandelnden Masse sind, eine Zone für die Beheizung des Reaktors (1), die durch eine ringförmige, sind in Längsrichtung befindliche Kammer (32) gebildet ist, und zwei Zonen, die zentral bzw. peripher angeordnet sind, für die Beheizung des Rotors (3, 5) aufweist.

18. Anlage nach Anspruch 17, dadurch gekennzeichnet, daß die zentral angeordnete Zone für die Beheizung des Rotors (3, 5) durch eine ringförmige, zylindrische Kammer gebildet wird, die zwischen der massiven Zentralwelle (4) des Rotors und eines koaxialen Rohrs (36) ausgespart wurde.

**Claims**

1. Nutritional product, especially for breeding animals and for soils, characterized in that it consists of aggregates of organic sea limestones of recent formation, particularly shells and especially of oysters, or lithothamnioid algae, part of which takes the form of at least one of the mono-, bi- and tricalcium phosphates resulting from the action of phosphoric acid on the said sea limestones, the said product containing a maximum of 20 % of phosphorus by weight.

2. Product according to Claim 1, intended more especially for the nutrition of laying hens, characterized in that it contains from 1 (one) to 3 (three) % of phosphorus by weight, and preferably approximately 2,6 % by weight.

3. Product according to Claim 1, intended more especially for the nutrition of livestock, characterized in that it contains from 3 to 10 % of phosphorus by weight, and preferably approximately 7 % by weight for cattle and approximately 9 % by weight for pigs.

4. Product according to Claim 1, intended more especially for soil nutrition, characterized in that it contains from 1 to 20 % of phosphorus by weight, and preferably approximately 5 to 10 % by weight.

5. Product according to one of Claims 1 to 4, characterized in that it has a degree of moisture, preferably achieved using sea water, of approximately 3 % for animal nutrition and approximately 7 % for soil nutrition.

6. Product according to one of Claims 1 to 5, characterized in that it has a particle size between 2 mm and 4 mm for animal nutrition, and between 0.5 mm and 3 mm for soil nutrition.

7. Product according to one of Claims 1 to 6, characterized in that the aggregates possess a core of organo-inorganic material unaffected by the action of phosphoric acid and, at the surface, microcracking and/or twisted fringes or loops resulting from the physicochemical action of the said acid.

8. Product according to one of Claims 1 to 7, characterized in that it has a lower content of tricalcium phosphate than of monocalciun phosphate and of bicalcium phosphate.

9. Product according to Claim 8, characterized in that it comprises a mixture of approximately 55 % of bicalcium phosphate, 35 % of monocalcium phosphate and 70 % of tricalcium phosphate.

10. Product according to one of Claims 3 to 9, characterized in that it is complemented by silicates of natural origin subjected to the action of phosphoric acid.

11. Process for manufacturing the product according to one of Claims 1 to 10, characterized in that it consists in causing phosphoric acid to act chemically on the aggregates of organic sea limestones of recent formation, in the prescence of water, in particular sea water, in partially attacking the aggregates by the said phosphoric acid to form at least one of the mono-, bi- and tricalcium phosphates around a shell core, and in extracting under reduced pressure the noxious gaseous products resulting from this reaction.

12. Process according to Claim 11, characterized in that the reaction is carried out in the presence of water, in particular sea water, the weight of which represents approximately between 12 and 18 % of the weight of the sea organic limestone material to be treated.

13. Process according to one of Claims 11 and 12, characterized in that the reaction is carried out at a temperature of 30° C to 100° C.

14. Process according to Claim 13, characterized in that the heating is achieved by means of a live steam circuit without contact with the mass being treated.

15. Process according to one of Claims 11 to 14, characterized in that the treated aggregates are dried to a moisture content of approximately 3 % for animal nutrition and approximately 7 % for soil nutrition.

16. Installation for manufacturing the product according to one of Claims 1 to 10 by implementing the process according to one of Claims 11 to 15, of the type which incorporates a horizontal cylindrical reactor (1), a rotor (3) incorporating means (5) for agitating the aggregates extending longitudinally and at the periphery of the reactor, means (15) for supplying the aggregates, means (16, 17) for supplying at least the phosphoric acid, means (28) for discharging the treated aggregates, and means (19) for evacuating the gaseous components resulting from the reaction, characterized in that the longitudinal means (5) bear vanes (7) sloping towards the discharge end of the reactor and located behind the said means (5) so as to ensure that they play the simple role of agitating the aggregates during the reaction, when the rotor (3) is driven in one direction by motor means (10), and the role of conveying the treated aggregates towards the said discharge end when, after the reaction, the rotor is driven in the opposite direction.

17. Installation according to Claim 16, characterized in that it incorporates three zones for circulation of live steam for heating without contact with the mass to be treated, a zone for heating the reactor (1), composed of a longitudinal annular chamber (32), and two zones for heating the rotor (3, 5), a central and a peripheral zone, respectively.

18. Installation according to Claim 17, characterized in that the central heating zone for the rotor (3, 5) is composed of a cylindrical annular chamber (35) provided between the solid central shaft (4) of the rotor and a coaxial tube (36).

FIG.1

FIG. 2

FIG.3